# EUROPEAN PATENT SPECIFICATION

(11) **EP 3 643 516 B1**
(45) Date of publication and mention of the grant of the patent: **18.05.2022**
(21) Application number: 18820893.8
(22) Date of filing: 24.05.2018
(51) Int. Cl.: B60C 9/18, B60C 9/00, B60C 9/20, B60C 9/26

(54) **TIRE**
REIFEN
PNEUMATIQUE

(30) Priority: 19.06.2017 JP 2017119985
(43) Date of publication of application: 29.04.2020
(73) Proprietor: Bridgestone Corporation, Tokyo 104-8340 (JP)
(72) Inventor: OTA, Saki, Tokyo 104-8340 (JP)
(74) Representative: Oxley, Robin John George
(86) International application number: PCT/JP2018/020072
(87) International publication number: WO 2018/235521

(56) References cited:
- EP-A1- 2 060 412
- EP-A1- 3 581 400
- WO-A1-2016/190152
- JP-A- S5 322 205
- JP-A- 2004 001 610
- JP-A- 2004 009 758
- JP-A- 2004 074 826

## Description

### TECHNICAL FIELD

The present invention relates to a tire, particularly an improvement of a tire including, in a crown portion: a spiral cord layer in which an upper layer and a lower layer are formed by spirally winding a reinforcing cord; and a core-material cord layer arranged between the upper layer and the lower layer.

### BACKGROUND ART

A variety of studies have been conducted on tire reinforcing members. For example, as the structure of a belt used as a reinforcing member of a tire for passenger vehicles, a structure in which two or more intersecting belt layers whose reinforcing cord directions intersect with each other are arranged on the crown-portion tire radial-direction outer side of a carcass serving as a skeleton member of the tire is commonly adopted. In addition, as the structure of a belt, a mode in which upper and lower two belt layers are arranged such that their reinforcing cords intersect with each other, the reinforcing cords being folded back at the ends of the respective belt layers and configured to have a spirally wound structure in which the reinforcing cords extend from one belt layer to the other, is also known.

As such a structure, for example, Patent Document 1 discloses a pneumatic radial tire in which plural belt layers formed by arranging reinforcing cords are embedded on the outer peripheral side of a carcass layer in a tread portion, and upper and lower two belt layers are arranged such that their reinforcing cords composed of organic fibers intersect with each other. In this pneumatic radial tire, the reinforcing cords are folded back at the ends of the respective belt layers and configured to have a spirally wound structure in which they extend from one belt layer to the other, another belt layer formed by arranging reinforcing cords composed of steel cords is disposed between the upper and lower two belt layers, and the orientation angle α of the reinforcing cords of this belt layer is set at 15° ≤ α < 45° with respect to the tire orientation angle α of the reinforcing cords of this belt layer is set at 15° ≤ α < 45° with respect to the tire circumferential direction.

### RELATED ART DOCUMENT

### PATENT DOCUMENT

[Patent Document 1] JPH10-109503A. Attention is also drawn to the disclosures od JP2004-74826, WO2016/190152, EP3581400 and EP2020412.

### SUMMARY OF THE INVENTION

### PROBLEMS TO BE SOLVED BY THE INVENTION

As disclosed in Patent Document 1, it is known to arrange a spiral cord layer, which is substantially constituted by upper and lower two layers each formed by spirally winding a reinforcing cord composed of organic fibers, on the outer peripheral side of a carcass layer for the purpose of improving the high-speed durability and the like of a tire, and it is also known to further arrange a core-material cord layer between the upper layer and the lower layer of this spiral cord layer.

However, as another problem in a tire to which such a spiral cord layer is applied, a problem of so-called groove cracking, which is the crack generation on the bottom of a groove in tread shoulder portions, has been pointed out. Meanwhile, depending on the material of the reinforcing cords of the spiral cord layer, separation (cracking) may occur originating at a width-direction end of the core-material cord layer, and it is demanded to solve this problem as well. These problems of groove cracking and separation originating at a width-direction end of the core-material cord layer are particularly prominent in tires for trucks and buses.

In view of the above, an object of the present invention is to provide a technology with which, in a tire including a spiral cord layer and a core-material cord layer arranged between an upper layer and a lower layer of the spiral cord layer in a tire crown portion, both the occurrence of groove cracking and the occurrence of separation from a width-direction end of the core-material cord layer can be suppressed.

### MEANS FOR SOLVING THE PROBLEMS

The present inventor intensively studied to solve the above-described problems and consequently discovered that the problems can be solved by using carbon fibers in a reinforcing cord of a spiral cord layer and controlling the core-material cord angle of a core-material cord layer to be in a prescribed range, thereby completing the present invention.

That is, the tire of the present invention is a tire as claimed in claim 1.

### EFFECTS OF THE INVENTION

According to the present invention, a tire including a spiral cord layer and a core-material cord layer arranged between an upper layer and a lower layer of the spiral cord layer in a tire crown portion, in which both the occurrence of groove cracking and the occurrence of separation from a width-direction end of the core-material cord layer are suppressed, can be realized.

### BRIEF DESCRIPTION OF THE DRAWINGS

[FIG. 1] FIG. 1 is a tire widthwise cross-sectional view illustrating one example of the constitution of a tire for trucks and buses according to the present invention.
[FIG. 2] FIG. 2 is a tire widthwise cross-sectional view illustrating one example of the constitution of a tire for passenger vehicles according to the present invention.
[FIG. 3] FIG. 3 is a tire widthwise cross-sectional view illustrating one example of the constitution of a tire for construction vehicles according to the present invention.
[FIG. 4] FIG. 4 is a graph showing the state of growth in diameter of a tire at the time of inflating the tire to an internal pressure, in which tire inclined belt layers composed of steel cords and a belt protective layer composed of steel cords are arranged.
[FIG. 5] FIG. 5 is a graph showing the state of growth in diameter of a tire at the time of inflating the tire to an internal pressure, in which tire a spiral cord layer composed of aramid cords, a core-material cord layer composed of steel cords, and a belt protective layer composed of steel cords are arranged.
[FIG. 6] FIG. 6 is a graph showing the state of growth in diameter of a tire at the time of inflating the tire to an internal pressure, in which tire a spiral cord layer composed of carbon fiber cords, a core-material cord layer composed of steel cords, and a belt protective layer composed of steel cords are arranged.
[FIG. 7] FIG. 7 is a widthwise partial cross-sectional view illustrating a tire for trucks and buses in which three belt layers and a single belt protective layer are arranged.
[FIG. 8] FIG. 8 is a widthwise partial cross-sectional view illustrating a tire for trucks and busses in which a spiral cord layer, a single core-material cord layer and a single belt protective layer are arranged.
[FIG. 9A] FIG. 9A is a drawing that illustrates contraction occurring in a spiral cord layer when an internal pressure is applied to a tire and the state of a strain generated at a width-direction end of a core-material cord layer arranged inside the spiral cord layer.
[FIG. 9B] FIG. 9B is a drawing that illustrates contraction occurring in a spiral cord layer when an internal pressure is applied to a tire and the state of a strain generated at a width-direction end of a core-material cord layer arranged inside the spiral cord layer.
[FIG. 9C] FIG. 9C is a drawing that illustrates contraction occurring in a spiral cord layer when an internal pressure is applied to a tire and the state of a strain generated at a width-direction end of a core-material cord layer arranged inside the spiral cord layer.
[FIG. 10] FIG. 10 is a graph showing the relationship between the angle of core-material cords of a core-material cord layer (based on the tire circumferential direction) and the amount of strain at a width-direction end of the core-material cord layer.

### MODE FOR CARRYING OUT THE INVENTION

The present invention will now be described in detail referring to the drawings.

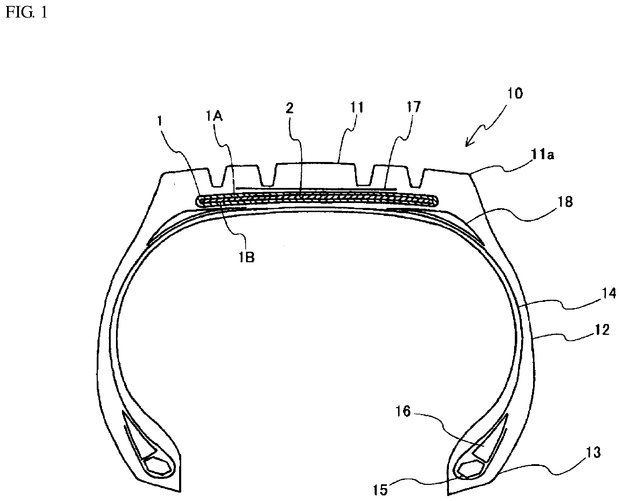

FIG. 1 is a tire widthwise cross-sectional view illustrating a tire for trucks and buses, which is one example of the tire of the present invention. As illustrated, a tire 10 includes: a tread portion 11 which forms a ground-contact part; a pair of side wall portions 12 which continuously extend inward in the tire radial direction on the respective sides of the tread portion 11; and bead portions 13 which continuously extend on the circumferential inner side of each side wall portion 12. The tread portion 11, the side wall portions 12 and the bead portions 13 are reinforced by a carcass 14, which is composed of a single carcass ply toroidally extending from one bead portion 13 to the other bead portion 13. In the illustrated tire 10 for trucks and buses, bead cores 15 are each embedded in the pair of the bead portions 13, and the carcass 14 is folded around the bead cores 15 from the inside to the outside of the tire and thereby anchored. In addition, bead fillers 16 are arranged on the tire radial-direction outer side of the respective bead cores 15.

Further, the tire of the present invention includes, on the tire radial-direction outer side of the carcass 14 in a crown portion: a spiral cord layer 1 having a structure in which an upper layer 1A and a lower layer 1B are formed by spirally winding a reinforcing cord; and a core-material cord layer 2 arranged between the upper layer 1A and the lower layer 1B. In the present invention, it is important to use carbon fibers in the reinforcing cord of the spiral cord layer 1 and to control the angle of core-material cords of the core-material cord layer 2 to be in a range of 15° to 25° with respect to the tire circumferential direction. By this, the occurrence of groove cracking and the occurrence of separation from a width-direction end of the core-material cord layer can both be suppressed. The mechanism thereof is described below.

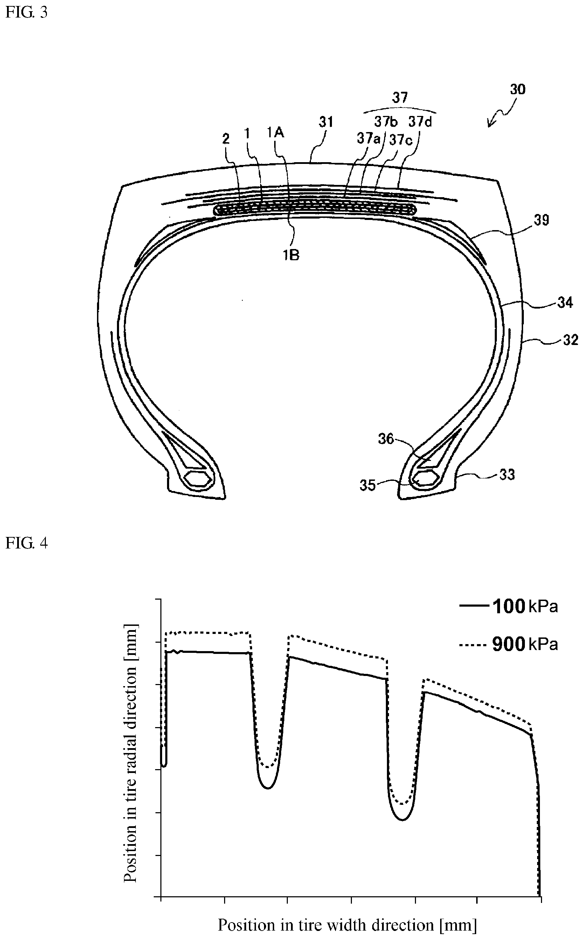

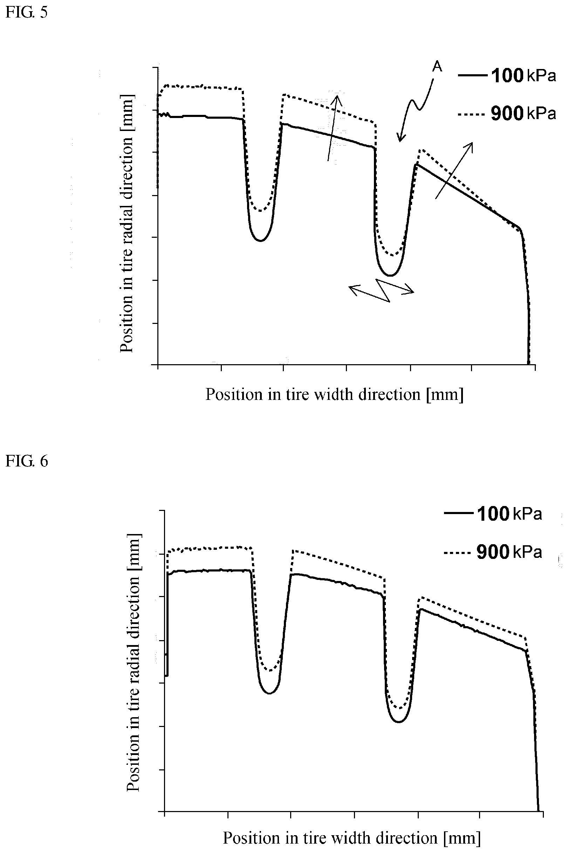

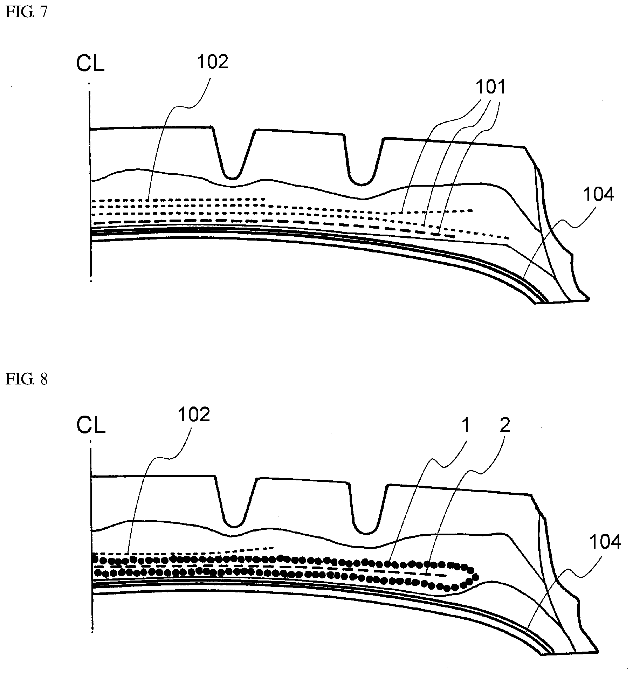

FIGs. 4 to 6 are graphs each showing the state of growth in diameter of a tire at the time of inflating the tire to an internal pressure. FIG. 4 is a graph showing the outer shapes of a tire for trucks and buses (see FIG. 7) at internal pressures of 100 kPa (solid line) and 900 kPa (dotted line), in which tire three inclined belt layers 101 composed of steel cords and a single belt protective layer 102 composed of steel cords are arranged on the tire radial-direction outer side of a single carcass 104. In the graph, the abscissa represents the position in the tire width direction based on the tire equator CL, and the ordinate represents the position of the tire surface in the tire radial direction. The same applies below. Further, FIG. 5 is a graph showing the outer shapes of a tire for trucks and buses (see FIG. 8) at internal pressures of 100 kPa (solid line) and 900 kPa (dotted line), in which tire a spiral cord layer 1 composed of aramid cords and a single core-material cord layer 2 composed of steel cords and positioned between an upper layer 1A and a lower layer 1B of the spiral cord layer 1 are arranged in place of the three inclined belt layers 101 composed of steel cords. As illustrated, the tire in which the spiral cord layer 1 and the core-material cord layer 2 are arranged in place of the three inclined belt layers 101 exhibits a larger growth in diameter in the vicinity of the tire equator CL due to the properties of the spiral cord layer 1 in which the upper layer 1A and the lower layer 1B are connected at the width-direction ends and, since this causes the bottom of a shoulder groove A to open wide, it is believed that groove cracking is more likely to occur.

In contrast, FIG. 6 is a graph showing the outer shapes of a tire for trucks and buses (see FIG. 8) at internal pressures of 100 kPa (solid line) and 900 kPa (dotted line), in which tire carbon fiber cords are used in place of the aramid cords as the reinforcing cord of the spiral cord layer 1. As illustrated, by using carbon fibers having a high tensile elastic modulus in place of the commonly-used aramid cords as the reinforcing cord of the spiral cord layer 1, the growth in diameter in the vicinity of the tire equator CL is suppressed, so that the bottom of the shoulder groove can be prevented from opening.

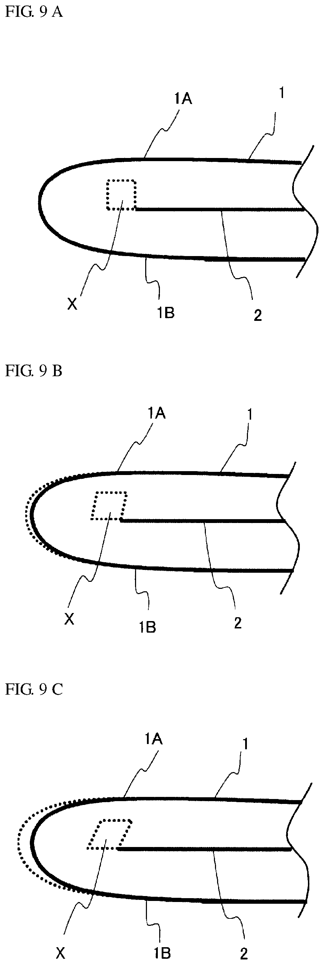

However, since the carbon fibers have a high elastic modulus, due to a tension generated in the tire circumferential direction at the time of inflating the tire and thereby applying an internal pressure, the strain in the rubber at the tire width-direction ends of the core-material cord layer 2 arranged inside the spiral cord layer 1 tends to be increased when the spiral cord layer 1 contracts along the tire width direction. FIGs. 9A to 9C are drawings that illustrate the contraction occurring in the spiral cord layer 1 and the state of a strain generated at a width-direction end of the core-material cord layer 2 arranged inside the spiral cord layer 1 when a tension in the tire circumferential direction is applied to the spiral cord layer 1 and the core-material cord layer 2 arranged between the upper layer 1A and the lower layer 1B of the spiral cord layer 1. Comparing the state after inflation of the tire to an internal pressure in the case of using aramid cords as the reinforcing cord of the spiral cord layer 1 (FIG. 9B) and the state after inflation of the tire to an internal pressure in the case of using carbon fibers as the reinforcing cord of the spiral cord layer 1 (FIG. 9C) based on the initial state illustrated in FIG. 9A, it is seen that the contraction of the spiral cord layer 1 is larger and the amount of the resulting strain at the width-direction end of the core-material cord layer 2 is greater in the case of using carbon fibers. FIGs. 9A and 9C mean that the spiral cord layer 1 contracts from the dotted-line part to the solid-line part and, with regard to the part indicated by a dotted line at the width-direction end of the core-material cord layer 2 in each of FIGs. 9A to 9C, a state where a rubber part X in the initial state of 9A is subjected to a strain is illustrated in each of 9B and 9C.

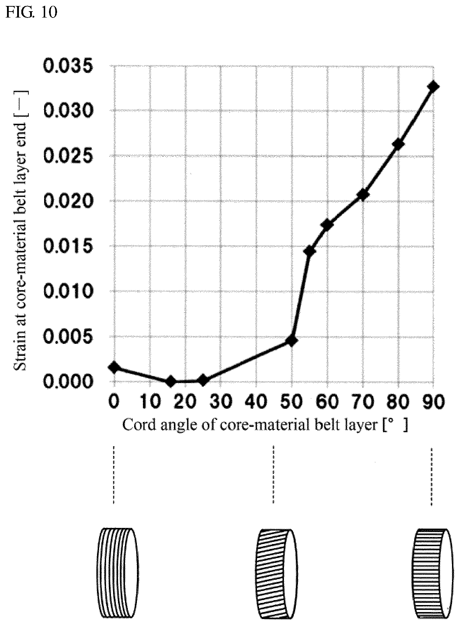

In this manner, when the strain of the rubber at a tire width-direction end of the core-material cord layer 2 is increased, cracking (separation) may occur at this part. This problem occurs not only when an internal pressure is applied but also during high-speed running. Therefore, in the present invention, the angle of the core-material cords of the core-material cord layer 2 is controlled to be close to the tire circumferential direction in a range of 15° to 25° with respect to the tire circumferential direction. By this, relative displacement of the spiral cord layer 1 and the core-material cord layer 2 is suppressed, and the core-material cord layer 2 is made unlikely to be affected even when the spiral cord layer 1 contracts along the tire width direction, as a result of which the occurrence of separation can be suppressed as well. The reason for this is as follows. That is, as seen from FIG. 10 that is a graph showing the relationship between the angle of core-material cords of a core-material cord layer (based on the tire circumferential direction) and the amount of strain at a width-direction end of the core-material cord layer, the amount of strain at a width-direction end of the core-material cord layer drastically increases once the cord angle of the core-material cord layer exceeds 50°. Therefore, by controlling the cord angle of the core-material cord layer to be 50° or smaller, an increase in the amount of strain can be suppressed even with the use of carbon fiber cords as the reinforcing cord of the spiral cord layer 1, and the occurrence of separation caused by strain can be consequently suppressed, so that the occurrence of groove cracking and the occurrence of separation at a core-material cord layer end can both be inhibited at the same time. Provided below the graph of FIG. 10 are schematic drawings illustrating the cord directions of the core-material cord layer in correspondence to the respective cord angles.

In the present invention, the carbon fibers used in the reinforcing cord of the spiral cord layer 1 are not particularly restricted and can be selected as appropriate from polyacrylonitrile (PAN)-based carbon fibers, pitch-based carbon fibers, rayon-based carbon fibers and the like. The tensile elastic modulus of the carbon fibers used in the reinforcing cord of the spiral cord layer 1 is preferably in a range of 60 to 300 GPa, more preferably in a range of 85 to 300 GPa. An effect of suppressing the growth in diameter in the vicinity of the tire equator CL can be obtained by using such carbon fibers; however, an excessively high tensile elastic modulus is not preferred since it leads to a reduction in the fatigue resistance. It is preferred that the reinforcing cord be treated with an adhesive so as to improve their adhesion with a rubber. This adhesive treatment can be performed in accordance with a conventional method using a commonly-used adhesive such as an RFL-based adhesive.

In the present invention, the total fineness of the reinforcing cord of the spiral cord layer 1 is preferably 1,000 dtex to 30,000 dtex, more preferably 5,000 dtex to 30,000 dtex, still more preferably 9,000 dtex to 30,000 dtex.

In the present invention, the angle of the core-material cords of the core-material cord layer 2 with respect to the tire circumferential direction is required to be in a range of 15° to 25°. When the angle of the core-material cords is larger than 50° with respect to the tire circumferential direction, the core-material cord layer 2 is likely to be affected by contraction of the spiral cord layer 1 along the tire width direction and, therefore, an effect of suppressing the occurrence of separation at a core-material cord layer end cannot be attained.

In the tire of the present invention, it is important to use carbon fibers in the reinforcing cord of the spiral cord layer 1 and to control the angle of the core-material cords of the core-material cord layer 2 to be in a range of 15° to 25° with respect to the tire circumferential direction, and this enables to attain the expected effects of the present invention. Other constitutions are not particularly restricted, and the tire of the present invention can be configured as appropriate in accordance with a conventional method.

In the present invention, the spiral cord layer 1 is formed by spirally winding a rubber-cord composite, which is obtained by parallelly arranging a single or plural (e.g., 2 to 100) reinforcing cords composed of the above-described carbon fibers and coating the resultant with a rubber, around the core-material cord layer 2. The end count of the reinforcing cord in the spiral cord layer 1 is preferably in a range of, for example, 5 to 60 cords/50 mm.

Further, in the present invention, the angle of the reinforcing cord of the spiral cord layer 1 is preferably in a range of 12° to 90° with respect to the tire circumferential direction. In the spiral cord layer 1, the upper layer 1A and the lower layer 1B are not separated at their tire width-direction ends; therefore, the spiral cord layer 1 has characteristics of exerting a tension and thus being unlikely to grow in diameter when an internal pressure is applied to the tire, and arrangement of the spiral cord layer 1 tends to make the crown portion round as a result. By controlling the angle of the reinforcing cord of the spiral cord layer 1 to be 12° or larger, the growth in diameter at the time of applying an internal pressure can be maintained within an acceptable range, and wearing of shoulder portions can be suppressed. It is noted here that, in the present invention, the angle of the reinforcing cord of the spiral cord layer 1 may be a value measured on the tire equatorial plane. This angle is preferably in a range of 12° to 45°.

In the present invention, the core-material cord layer 2 arranged inside the spiral cord layer 1 may be arranged singly, or a plurality thereof (e.g., 2 to 10) may be laminated. In the present invention, also when two or more core-material cord layers 2 are arranged, it is required that all of the core-material cord layers 2 satisfy the above-described condition for the angle of the core-material cords. It is noted here that, when plural core-material cord layers 2 are arranged, the plural core-material cord layers 2 may constitute intersecting belt layers. The core-material cord layer 2 is produced by parallelly arranging a large number of core-material cords and subsequently arranging an unvulcanized rubber on top and bottom thereof to coat the core-material cords with the rubber. The end count of the core-material cords in the core-material cord layer 2 is preferably in a range of, for example, 5 to 60 cords/50 mm.

In the present invention, the material of the core-material cords of the core-material cord layer 2 is not particularly restricted, and various metal cords, organic fiber cords and the like that are conventionally and commonly used can be employed as appropriate. Specific examples of the metal cords that can be used include steel filaments, and steel cords obtained by twisting plural steel filaments together. In this case, various designs can be adopted for the twist structure of the cords, and various cross-sectional structures, twist pitches, twist directions and distances between adjacent filaments can be employed. As the cross-sectional structures, various twist structures such as single twist, layer twist and multi-twist can be adopted, and cords having a flat cross-sectional shape can be used as well. The steel filaments constituting the steel cords contain iron as a main component, and may further contain various trace elements, such as carbon, manganese, silicon, phosphorus, sulfur, copper, and chromium. Moreover, on the surface of the steel filaments, brass plating may be performed for improvement of the adhesion with a rubber.

As organic fibers, for example, aramid fibers (aromatic polyamide fibers), polyketone (PK) fibers, poly-p-phenylene benzobisoxazole (PBO) fibers, and polyarylate fibers can be used. In addition, for example, carbon fibers, such as polyacrylonitrile (PAN)-based carbon fibers, pitch-based carbon fibers and rayon-based carbon fibers, as well as glass fibers and rock fibers (rock wool) such as basalt fibers and andesite fibers, can also be used. It is noted here that the reinforcing cord be treated with an adhesive so as to improve their adhesion with a rubber. This adhesive treatment can be performed in accordance with a conventional method using a commonly-used adhesive such as an RFL-based adhesive. Further, hybrid cords composed two or more kinds of the above-described fibers may be used as well.

In the present invention, a rubber composition used as a coating rubber of the spiral cord layer 1 and the core-material cord layer 2 is not particularly restricted and any known rubber composition can be used. For example, as a rubber component contained in the rubber composition used as the coating rubber, any known rubber component can be used, and examples thereof include natural rubbers and synthetic rubbers, such as vinyl aromatic hydrocarbon-conjugated diene copolymers, polyisoprene rubbers, butadiene rubbers, butyl rubbers, halogenated butyl rubbers, and ethylene-propylene rubbers. These rubber components may be used individually, or two or more thereof may be used in combination. From the standpoints of the characteristics of adhesion with metal cords and the fracture characteristics of the rubber composition, the rubber component is preferably one composed of at least either a natural rubber or a polyisoprene rubber, or one which contains a natural rubber in an amount of not less than 50% by mass and in which the remainder is composed of a synthetic rubber.

In the rubber composition used as the coating rubber in the present invention, an additive(s) normally used in the rubber industry, examples of which include fillers (e.g., carbon black and silica), softening agents (e.g., aromatic oil), methylene donors (e.g., methoxymethylated melamines, such as hexamethylenetetramine, pentamethoxymethylmelamine, and hexamethylene methylmelamine), vulcanization accelerators, vulcanization aids and age resistors, can be incorporated as appropriate in an ordinary amount. Further, a method of preparing the rubber composition used as the coating rubber in the present invention is not particularly restricted and, the rubber composition can be prepared by, for example, kneading sulfur, an organic acid cobalt salt and various additives into a rubber component using a Banbury mixer, a roll or the like in accordance with a conventional method.

In the illustrated tire 10 for trucks and buses, an auxiliary belt layer 17 is arranged on the tire radial-direction outer side of the spiral cord layer 1. In the present invention, the auxiliary belt layer may be arranged as desired. The auxiliary belt layer 17 can be an inclined belt in which belt cords have a prescribed angle with respect to the tire circumferential direction, and the auxiliary bet layer 17 is formed by parallelly arranging a large number of belt cords and coating the belt cords with a rubber.

In the present invention, the angle of the belt cords of the auxiliary belt layer 17 with respect to the tire circumferential direction is preferably in a range of 0° to 45°, more preferably in a range of 0° to 20°. When the angle of the belt cords is larger than 45° with respect to the tire circumferential direction, since the belt cords can bear hardly any tension generated in the tire circumferential direction, an effect of improving the durability of the reinforcing cord of the spiral cord layer cannot be attained.

As a reinforcing cord of the auxiliary belt layer, it is most common to use, for example, metal cords, particularly steel cords; however, organic fiber cords may be used as well. As the steel cords, cords that are composed of steel filaments containing iron as a main component along with various trace elements, such as carbon, manganese, silicon, phosphorus, sulfur, copper and chromium, can be used.

As the steel cords, in addition to those cords obtained by twisting plural filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting together filaments of different materials can also be used. The cross-sectional structure thereof is not particularly restricted, and various twist structures such as single twist, layer twist and multi-twist can be adopted. Moreover, the width of the auxiliary belt layer 17 is preferably 40% to 115%, particularly preferably 50% to 70%, of the tread width. On the tire radial-direction inner side of each end of the spiral cord layer 1, it is preferred to arrange a belt under-cushion rubber 18. By this, strain and temperature applied to the ends of the spiral cord layer 1 are reduced, so that the tire durability can be improved.

In the tire 10 for trucks and buses according to the present invention, a variety of constitutions including conventional structures can be adopted for the carcass 14, and the carcass 14 may have a radial structure or a bias structure. The carcass 14 is preferably constituted by one or two carcass plies each composed of a steel cord layer. Further, the carcass 14 may have its maximum-width positions in the tire radial direction, for example, on the side closer to the respective bead portions 13 or on the side closer to the tread portion 11. For example, the maximum-width positions of the carcass 14 can be arranged in a range of 50% to 90% from each bead base on the tire radial-direction outer side with respect to the tire height. Moreover, as illustrated, the carcass 14 is generally and preferably configured to extend between the pair of the bead cores 15 without interruption; however, the carcass 14 can also be constituted by a pair of carcass pieces that extend from the respective bead cores 15 and are interrupted in the vicinity of the tread portion 11.

A variety of structures can be adopted for the folded parts of the carcass 14. For example, the folded ends of the carcass 14 can be positioned on the tire radial-direction inner side than the upper ends of bead fillers 16, and the folded ends of the carcass may extend further on the tire radial-direction outer side than the upper ends of the bead fillers 16 or the tire maximum-width positions. In this case, the folded ends of the carcass may also extend to the tire width-direction inner side than the tire width-direction ends of the spiral cord layer 1. Further, in cases where plural carcass plies are arranged, the positions of the folded ends of the carcass 14 in the tire radial direction may be different from each other. Alternatively, the carcass 14 may take a structure in which the carcass 14 is sandwiched by plural bead core members or wound around the bead cores 15, in the absence of folded parts. The end count of the carcass 14 is generally in a range of 5 to 60 cords/50 mm; however, the end count is not restricted thereto.

Further, in the tire 10 for trucks and buses according to the present invention, a circumferential cord layer (not illustrated) may be arranged on the tire radial-direction outer side of the spiral cord layer 1 and the auxiliary belt layer 17.

In the tire 10 for trucks and buses according to the present invention, a known structure can be adopted also for the side wall portions 12. For example, the tire maximum-width positions can be arranged in a range of 50% to 90% from each bead base on the tire radial-direction outer side with respect to the tire height. In the tire 10 for trucks and buses according to the present invention, it is preferred that the side wall portions 12 be each formed as a smooth curve having a convex shape in the tire width direction without a recess that comes into contact with the rim flange, which is different from the tire for passenger vehicles.

Moreover, a variety of structures, such as a circular shape and a polygonal shape, can be adopted for the bead cores 15. It is noted here that, as described above, the bead portions 13 may have a structure in which the carcass 14 is wound on the bead cores 15, or a structure in which the carcass 14 is sandwiched by plural bead core members. In the illustrated tire 10 for trucks and buses, bead fillers 16 are arranged on the tire radial-direction outer side of the respective bead cores 15, and the bead fillers 16 may each be constituted by plural rubber members that are separated from each other in the tire radial direction.

In the tire 10 for trucks and buses according to the present invention, the tread pattern may be a pattern mainly constituted by rib-like land portions, a block pattern or an asymmetrical pattern, and the tread pattern may have a designated rotation direction.

The pattern mainly constituted by rib-like land portions is a pattern which is mainly constituted by rib-like land portions that are partitioned in the tire width direction by at least one circumferential groove or by a circumferential groove(s) and tread ends. The term "rib-like land portions" used herein refers to land portions that extend in the tire circumferential direction without any lateral groove across the tire width direction; however, the rib-like land portions may have sipes and lateral grooves terminating within each rib-like land portion. Since a radial tire has a high ground-contact pressure particularly when used at a high internal pressure, it is believed that the ground-contact performance on wet road surfaces is improved by increasing the circumferential shear rigidity. The pattern mainly constituted by rib-like land portions can be, for example, a tread pattern in which a region that is centered on the equatorial plane and corresponds to 80% of the tread width consists of only rib-like land portions, namely a pattern with no lateral groove. In such a pattern, the drainage performance in this region largely contributes to wet performance in particular.

The block pattern is a pattern including block land portions that are partitioned by circumferential grooves and widthwise grooves, and a tire having such a block pattern exhibits excellent basic on-ice performance and on-snow performance.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

The tread rubber is not particularly restricted, and any conventionally used rubber can be used. The tread rubber may be constituted by plural rubber layers that are different from each other along the tire radial direction, and the tread rubber may have, for example, a so-called cap-base structure. As the plural rubber layers, those that are different from each other in terms of loss tangent, modulus, hardness, glass transition temperature, material and the like can be used. The thickness ratio of the plural rubber layers in the tire radial direction may vary along the tire width direction and, for example, only the bottom of the circumferential grooves may be constituted by a rubber layer(s) different from the surroundings.

Alternatively, the tread rubber may be constituted by plural rubber layers that are different from each other along the tire width direction, and the tread rubber may have a so-called divided tread structure. As the plural rubber layers, those that are different from each other in terms of loss tangent, modulus, hardness, glass transition temperature, material and the like can be used. The length ratio of the plural rubber layers in the tire width direction may vary along the tire radial direction, and only a limited region, such as only the vicinity of the circumferential grooves, only the vicinity of the tread ends, only the shoulder land portions or only the center land portion, may be constituted by a rubber layer(s) different from the surroundings. Further, in the tread portion, it is preferred that a corner 11a be formed at each tire width-direction end.

The tire illustrated in FIG. 1 is a tire for trucks and buses; however, the present invention is not restricted thereto and can also be suitably applied to, for example, tires for passenger vehicles, tires for construction vehicles, tires for two-wheeled vehicles, tires for airplanes, and tires for agriculture. Further, the tire is not restricted to be a pneumatic tire and can also be applied as a solid tire or a non-pneumatic tire.

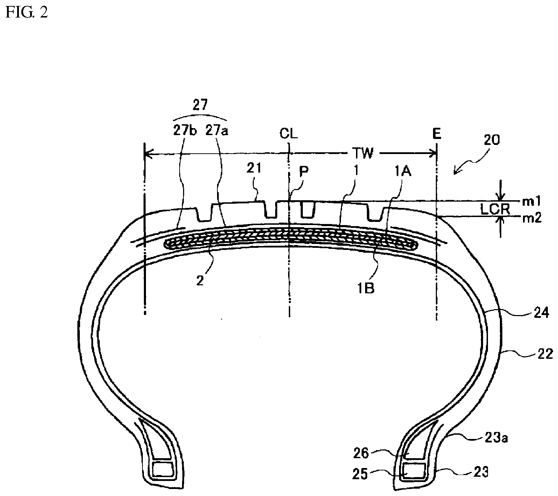

FIG. 2 is a tire widthwise cross-sectional view illustrating one example of the constitution of a tire for passenger vehicles according to the present invention. An illustrated tire 20 for passenger vehicles includes: a tread portion 21 which forms a ground-contact part; a pair of side wall portions 22 which continuously extend inward in the tire radial direction on the respective sides of the tread portion 21; and bead portions 23 which continuously extend on the circumferential inner side of each side wall portion 22. The tread portion 21, the side wall portions 22 and the bead portions 23 are reinforced by a carcass 24, which is composed of a single carcass ply toroidally extending from one bead portion 23 to the other bead portion 23. In the illustrated tire 20 for passenger vehicles, bead cores 25 are each embedded in the pair of the bead portions 23, and the carcass 24 is folded around the bead cores 25 from the inside to the outside of the tire and thereby anchored. In addition, bead fillers 26 are arranged on the tire radial-direction outer side of the respective bead cores 25.

In the illustrated tire 20 for passenger vehicles, on the tire radial-direction outer side of the carcass 24 in the crown portion, a spiral cord layer 1 having a structure in which an upper layer 1A and a lower layer 1B are formed by spirally winding a reinforcing cord, a core-material cord layer 2 positioned between the upper layer 1A and the lower layer 1B, and an auxiliary belt layer 27 are sequentially arranged.

In the present invention, it is important that the reinforcing cord of the spiral cord layer 1 and the cord angle of the core-material cord layer 2 satisfy the above-described conditions, and this enables to attain the expected effects of the present invention. In the case of the tire for passenger vehicles that is illustrated in FIG. 2, examples of the auxiliary belt layer 27 include a cap layer 27a which is arranged over the entire width or more of the spiral cord layer 1, and a layered layer 27b which is arranged in the regions that cover the respective ends of the spiral cord layer 1. Usually, the cap layer 27a and the layered layer 27b are each formed by spirally winding a constant-width strip that is obtained by paralleling a large number of cords and coating the cords with a rubber. The cap layer 27a and the layered layer 27b may each be arranged alone, or both of them may be arranged in combination. Alternatively, the auxiliary belt layer 27 may be a combination of two or more cap layers and/or two or more layered layers.

Various materials can be used as the reinforcing cords of the cap layer 27a and the layered layer 27b, and representative examples thereof include rayon, nylon, polyethylene naphthalate (PEN), polyethylene terephthalate (PET), aramid, glass fibers, carbon fibers, and steel. From the standpoint of weight reduction, the reinforcing cords are particularly preferably organic fiber cords. As the reinforcing cords, monofilament cords, cords obtained by twisting plural filaments together, or hybrid cords obtained by twisting together filaments of different materials can be used as well. Further, in order to increase the breaking strength, wavy cords may be used as the reinforcing cords. Similarly, in order to increase the breaking strength, for example, high-elongation cords having an elongation at break of 4.5% to 5.5% may be used.

The end count of the cap layer 27a and that of the layered layer 27b are generally in a range of 20 to 60 cords/50 mm; however, the end counts are not restricted thereto. For example, the cap layer 27a may be imparted with distribution in the tire width direction in terms of rigidity, material, number of layers, cord density and the like and, for example, the number of layers can be increased only at the tire width-direction ends, or only in the central part.

From the production standpoint, it is particularly advantageous to configure the cap layer 27a and the layered layer 27b as spiral layers. In this case, these layers may be constituted by strip-from cords in which plural core wires arranged in parallel to each other in a plane are bundled together by a wrapping wire with the parallel arrangement being maintained.

In the tire 20 for passenger vehicles according to the present invention, a variety of constitutions including conventional structures can be adopted for the carcass 24, and the carcass 24 may have a radial structure or a bias structure. The carcass 24 is preferably constituted by one or two carcass plies each composed of an organic fiber cord layer. Further, the carcass 24 may have its maximum-width positions in the tire radial direction, for example, on the side closer to the respective bead portions 23 or on the side closer to the tread portion 21. For example, the maximum-width positions of the carcass 24 can be arranged in a range of 50% to 90% from each bead base on the tire radial-direction outer side with respect to the tire height. Moreover, as illustrated, the carcass 24 is generally and preferably configured to extend between the pair of the bead cores 25 without interruption; however, the carcass 24 can also be constituted by a pair of carcass ply pieces that extend from the respective bead cores 25 and are interrupted in the vicinity of the tread portion 21 (not illustrated).

A variety of structures can be adopted for the folded parts of the carcass 24. For example, the folded ends of the carcass 24 can be positioned on the tire radial-direction inner side than the upper ends of bead fillers 26, and the folded ends of the carcass 24 may extend further on the tire radial-direction outer side than the upper ends of the bead fillers 26 or the tire maximum-width positions. In this case, the folded ends of the carcass 24 may also extend to the tire width-direction inner side than the tire width-direction ends of the spiral cord layer 1. Further, in cases where plural carcass plies are arranged, the positions of the folded ends of the carcass 24 in the tire radial direction may be different from each other. Alternatively, the carcass 24 may take a structure in which the carcass 24 is sandwiched by plural bead core members or wound around the bead cores 25, in the absence of folded parts. The end count of the carcass 24 is generally in a range of 5 to 60 cords/50 mm; however, the end count is not restricted thereto.

With regard to the shape of the tread portion 21 in the tire 20 for passenger vehicles according to the present invention that has a narrow width and a large diameter, when, at a tire widthwise cross-section, a straight line that runs through a point P on the tread surface in the tire equatorial plane CL and is parallel to the tire width direction is defined as "m1", a straight line that runs through a ground-contact end E and is parallel to the tire width direction is defined as "m2", the distance between the straight lines m1 and m2 in the tire radial direction is defined as fall height "LCR" and the tread width of the tire is defined as "TW", the ratio LCR/TW is preferably 0.045 or lower. By controlling the ratio LCR/TW in this range, the crown portion of the tire is flattened (planarized), so that the ground-contact area is increased and the input (pressure) from the road surface is thus alleviated, whereby the deflection rate in the tire radial direction can be reduced and the durability and the wear resistance of the tire can be improved. Further, the tread ends are preferably smooth.

The tread pattern may be a full-lug pattern, a pattern mainly constituted by rib-like land portions, a block pattern or an asymmetrical pattern, and the tread pattern may have a designated rotation direction.

The full-lug pattern may be a pattern that includes widthwise grooves extending in the tire width direction from the vicinity of the equatorial plane to the ground-contact ends and, in this case, the pattern is not required to have a circumferential groove. Such a pattern mainly constituted by lateral grooves is capable of effectively exerting on-snow performance in particular.

The pattern mainly constituted by rib-like land portions is a pattern which is mainly constituted by rib-like land portions that are partitioned in the tire width direction by at least one circumferential groove or by a circumferential groove(s) and tread ends. The term "rib-like land portions" used herein refers to land portions that extend in the tire circumferential direction without any lateral groove across the tire width direction; however, the rib-like land portions may have sipes and lateral grooves terminating within each rib-like land portion. Since a radial tire has a high ground-contact pressure particularly when used at a high internal pressure, it is believed that the ground-contact performance on wet road surfaces is improved by increasing the circumferential shear rigidity. The pattern mainly constituted by rib-like land portions can be, for example, a tread pattern in which a region that is centered on the equatorial plane and corresponds to 80% of the tread width consists of only rib-like land portions, namely a pattern having no lateral groove. In such a pattern, the drainage performance in this region largely contributes to the wet performance in particular.

The block pattern is a pattern including block land portions that are partitioned by circumferential grooves and widthwise grooves, and a tire having such a block pattern exhibits excellent basic on-ice performance and on-snow performance.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

The tread rubber is not particularly restricted, and any conventionally used rubber or a foamed rubber can be used. The tread rubber may be constituted by plural rubber layers that are different from each other along the tire radial direction, and the tread rubber may have, for example, a so-called cap-base structure. As the plural rubber layers, those that are different from each other in terms of loss tangent, modulus, hardness, glass transition temperature, material and the like can be used. The thickness ratio of the plural rubber layers in the tire radial direction may vary along the tire width direction and, for example, only the bottom of the circumferential grooves may be constituted by a rubber layer(s) different from the surroundings.

Alternatively, the tread rubber may be constituted by plural rubber layers that are different from each other along the tire width direction, and the tread rubber may have a so-called divided tread structure. As the plural rubber layers, those that are different from each other in terms of loss tangent, modulus, hardness, glass transition temperature, material and the like can be used. The length ratio of the plural rubber layers in the tire width direction may vary along the tire radial direction, and only a limited region, such as only the vicinity of the circumferential grooves, only the vicinity of the tread ends, only the shoulder land portions or only the center land portion, may be constituted by a rubber layer(s) different from the surroundings.

In the tire 20 for passenger vehicles according to the present invention, a known structure can be adopted also for the side wall portions 22. For example, the tire maximum-width positions can be arranged in a range of 50% to 90% from each bead base on the tire radial-direction outer side with respect to the tire height. Further, a structure including a rim guard may be adopted as well. In the tire 20 for passenger vehicles according to the present invention, it is preferred that a recess 23a, which comes into contact with the rim flange, be formed.

Moreover, a variety of structures, such as a circular shape and a polygonal shape, can be adopted for the bead cores 25. It is noted here that, as described above, the bead portions 23 may have a structure in which the carcass 24 is wound on the bead cores 25, or a structure in which the carcass 24 is sandwiched by plural bead core members. In the illustrated tire 20 for passenger vehicles, bead fillers 26 are arranged on the tire radial-direction outer side of the respective bead cores 25; however, the bead fillers 26 may be omitted in the tire 20 for passenger vehicles according to the present invention.

In the tire for passenger vehicles according to the present invention, usually, an inner liner may be arranged in the innermost layer of the tire, although it is not illustrated in the drawing. The inner liner may be constituted by a rubber layer mainly composed of butyl rubber, or a film layer containing a resin as a main component. Further, although not illustrated in the drawing, a porous member may be arranged and an electrostatic flocking process may be performed on the tire inner surface for the purpose of reducing cavity resonance noise. Moreover, on the tire inner surface, a sealant member for inhibition of air leakage upon puncture of the tire may be arranged as well.

The use of the tire 20 for passenger vehicles is not particularly restricted. The tire 20 can be suitably used as a summer tire, an all-season tire, or a winter tire. It is also possible to use the tire 20 as a tire for passenger vehicles that has a special structure, such as a side-reinforced run-flat tire having a crescent-shaped reinforcing rubber layer in the side wall portions 22, or a studded tire.

FIG. 3 is a tire widthwise cross-sectional view illustrating one example of the constitution of the tire for construction vehicles according to the present invention. The illustrated tire 30 for construction vehicles includes: a tread portion 31 which forms a ground-contact part; a pair of side wall portions 32 which continuously extend inward in the tire radial direction on the respective sides of the tread portion 31; and bead portions 33 which continuously extend on the circumferential inner side of each side wall portion 32. The tread portion 31, the side wall portions 32 and the bead portions 33 are reinforced by a carcass 34, which is composed of a single carcass ply toroidally extending from one bead portion 33 to the other bead portion 33. In the illustrated tire 30 for construction vehicles, bead cores 35 are each embedded in the pair of the bead portions 33, and the carcass 34 is folded around the bead cores 35 from the inside to the outside of the tire and thereby anchored. In addition, bead fillers 36 are arranged on the tire radial-direction outer side of the respective bead cores 35.

In the illustrated tire 30 for construction vehicles, on the tire radial-direction outer side of the carcass 34 in the crown region, a spiral cord layer 1 having a structure in which an upper layer 1A and a lower layer 1B are formed by spirally winding a reinforcing cord, a core-material cord layer 2 positioned between the upper layer 1A and the lower layer 1B, and four belt layers 37a to 37d are sequentially arranged.

In the present invention, it is important that the reinforcing cord of the spiral cord layer 1 and the cord angle of the core-material cord layer 2 satisfy the above-described conditions, and this enables to attain the expected effects of the present invention. Generally, a tire for construction vehicles includes four to six belt layers and, when the tire for construction vehicles includes six belt layers, first and second belt layers constitute an inner intersecting belt layer group; third and fourth belt layers constitute a middle intersecting belt layer group; and fifth and sixth belt layers constitute an outer intersecting belt layer group. In the tire for construction vehicles according to the present invention, the inner intersecting belt layer group is replaced with the spiral cord layer 1, and the auxiliary belt layers 37a to 37d are arranged as the middle and outer intersecting belt layer groups. Meanwhile, in the case of a tire for construction vehicles that includes four belt layers, the first and the second belt layers may be replaced with the spiral cord layer 1, and the third and the fourth belt layers may be the auxiliary belt layers 37a and 37b.

When the tire for construction vehicles includes six belt layers, in the tread width direction, the width of the spiral cord layer 1 can be 25% to 70% of the width of the tread surface; the width of the auxiliary belt layers 37a and 37b can be 55% to 90% of the width of the tread surface; and the width of the auxiliary belt layers 37c and 37d can be 60% to 115% of the width of the tread surface.

In the tire 30 for construction vehicles according to the present invention, the auxiliary belt layers 37 can be inclined belts which are each composed of a rubberized layer of the reinforcing cord and have a prescribed angle with respect to the tire circumferential direction. As the reinforcing cord of the inclined belt layers, it is most common to use, for example, metal cords, particularly steel cords; however, organic fiber cords may be used as well. As the steel cords, cords that are composed of steel filaments containing iron as a main component along with various trace elements, such as carbon, manganese, silicon, phosphorus, sulfur, copper and chromium, can be used.

As the steel cords, in addition to those cords obtained by twisting plural filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting together filaments of different materials can also be used. The cross-sectional structure thereof is not particularly restricted, and various twist structures such as single twist, layer twist and multi-twist can be adopted. The inclination angle of the reinforcing cord of the other belt layers is preferably 10° or larger with respect to the tire circumferential direction. Moreover, among the auxiliary belt layers 37, the width of a maximum-width inclined belt layer having the largest width is preferably 90% to 115%, particularly preferably 100% to 105%, of the tread width. On the tire radial-direction inner side of the respective ends of the auxiliary belt layers 37, it is preferred to arrange a belt under-cushion rubber 39. By this, strain and temperature applied to the ends of the auxiliary belt layers 37 are reduced, so that the tire durability can be improved.

In the tire for construction vehicles according to the present invention, a variety of constitutions including conventional structures can be adopted for the carcass 34, and the carcass 34 may have a radial structure or a bias structure. The carcass 34 is preferably constituted by one or two carcass plies each composed of a steel cord layer. Further, the carcass 34 may have its maximum-width positions in the tire radial direction, for example, on the side closer to the respective bead portions 33 or on the side closer to the tread portion 31. For example, the maximum-width positions of the carcass 34 can be arranged in a range of 50% to 90% from each bead base on the tire radial-direction outer side with respect to the tire height. Moreover, as illustrated, the carcass 34 is generally and preferably configured to extend between the pair of the bead cores 35 without interruption; however, the carcass 34 can also be constituted by a pair of carcass pieces that extend from the respective bead cores 35 and are interrupted in the vicinity of the tread portion 31.

A variety of structures can be adopted for the folded parts of the carcass 34. For example, the folded ends of the carcass 34 can be positioned on the tire radial-direction inner side than the upper ends of bead fillers 36, and the folded ends of the carcass 34 may extend further on the tire radial-direction outer side than the upper ends of the bead fillers 36 or the tire maximum-width positions. In this case, the folded ends of the carcass 34 may also extend to the tire width-direction inner side than the tire width-direction ends of the spiral cord layer 1. Further, in cases where plural carcass plies are arranged, the positions of the folded ends of the carcass 34 in the tire radial direction may be different from each other. Alternatively, the carcass 34 may take a structure in which the carcass 34 is sandwiched by plural bead core members or wound around the bead cores 35, in the absence of folded parts. The end count of the carcass 34 is generally in a range of 10 to 60 cords/50 mm; however, the end count is not restricted thereto.

In the tire 30 for construction vehicles according to the present invention, a known structure can be adopted also for the side wall portions 32. For example, the tire maximum-width positions can be arranged in a range of 50% to 90% from each bead base on the tire radial-direction outer side with respect to the tire height. In the tire 30 for construction vehicles according to the present invention, it is preferred that a recess, which comes into contact with the rim flange, be formed.

Moreover, a variety of structures, such as a circular shape and a polygonal shape, can be adopted for the bead cores 35. It is noted here that, as described above, the bead portions 33 may have a structure in which the carcass 34 is wound on the bead cores 35, or a structure in which the carcass 34 is sandwiched by plural bead core members. In the illustrated tire 30 for construction vehicles, bead fillers 36 are arranged on the tire radial-direction outer side of the respective bead cores 35, and the bead fillers 36 may each be constituted by plural rubber members that are separated from each other in the tire radial direction.

In the tire 30 for construction vehicles according to the present invention, the tread pattern may be a lug pattern, a block pattern or an asymmetrical pattern, and the tread pattern may have a designated rotation direction.

The lug pattern may be a pattern that includes widthwise grooves extending in the tire width direction from the vicinity of the equatorial plane to the ground-contact ends and, in this case, the pattern is not required to have a circumferential groove.

The block pattern is a pattern including block land portions that are partitioned by circumferential grooves and widthwise grooves. Particularly, in the case of a tire for construction vehicles, the blocks are preferably large from the durability standpoint and, for example, the width of each block measured in the tire width direction is preferably 25% to 50% of the tread width.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

The tread rubber is not particularly restricted, and any conventionally used rubber can be used. The tread rubber may be constituted by plural rubber layers that are different from each other along the tire radial direction, and the tread rubber may have, for example, a so-called cap-base structure. As the plural rubber layers, those that are different from each other in terms of loss tangent, modulus, hardness, glass transition temperature, material and the like can be used. The thickness ratio of the plural rubber layers in the tire radial direction may vary along the tire width direction and, for example, only the bottom of the circumferential grooves may be constituted by a rubber layer(s) different from the surroundings.

Alternatively, the tread rubber may be constituted by plural rubber layers that are different from each other along the tire width direction, and the tread rubber may have a so-called divided tread structure. As the plural rubber layers, those that are different from each other in terms of loss tangent, modulus, hardness, glass transition temperature, material and the like can be used. The length ratio of the plural rubber layers in the tire width direction may vary along the tire radial direction, and only a limited region, such as only the vicinity of the circumferential grooves, only the vicinity of the tread ends, only the shoulder land portions or only the center land portion, may be constituted by a rubber layer(s) different from the surroundings.

In the tire 30 for construction vehicles, the thicker the rubber gauge of the tread portion 31, the more preferred it is from the durability standpoint, and the rubber gauge of the tread portion 31 is preferably 1.5% to 4%, more preferably 2% to 3%, of the tire outer diameter. Further, the ratio of the groove area with respect to the ground-contact surface of the tread portion 31 (negative ratio) is preferably not higher than 20%. The reason for this is because the tire 30 for construction vehicles is primarily used at low speed in dry areas and, therefore, it is not necessary to have a high negative ratio for drainage performance. As for the size of the tire for construction vehicles, for example, the rim diameter is not less than 20 inches, particularly not less than 40 inches for a large-size tire.

### EXAMPLES

The present invention will now be described in more detail by way of examples thereof.

Reinforcing cords were spirally wound on a single core-material cord layer to prepare a reinforcing member that had a structure including a core-material cord layer between an upper layer and a lower layer of a spiral cord layer. The thus obtained reinforcing member was arranged on the tire radial-direction outer side of a carcass in the crown portion, and an auxiliary belt layer was further arranged on the tire radial-direction outer side of this reinforcing member, whereby tires for trucks and buses as illustrated in FIG. 1 were produced at a tire size of 275/80R22.5.

As core-material cords of the core-material cord layer and belt cords of the auxiliary belt layer, steel cords having a 1+6 structure composed of steel filaments of 1.13 mm in diameter were used. The inclination angle of the reinforcing cords of the spiral cord layer was set at 16° with respect to the longitudinal direction of the reinforcing member. The inclination angle of the belt cords of the auxiliary belt layer was set at 70° with respect to the longitudinal direction of the reinforcing member.

Further, the inclination direction of the steel cords of the auxiliary belt layer was the same as that of the reinforcing cords of the upper layer of the adjacent spiral cord layer, while the inclination angle of the steel cords the core-material cord layer was opposite thereto. Moreover, the end count of the core-material cord layer and that of the auxiliary belt layer were set at 18.06 cords/50 mm and 24.21 cords/50 mm, respectively.

Test tires were each produced by changing the conditions for the reinforcing cords of the spiral cord layer and the cord angle of the core-material cord layer as shown in Tables below.

### <Evaluation of Groove Cracking>

The thus obtained test tires were each mounted on a rim, inflated to a prescribed internal pressure, and then subjected to a 100,000-km running test on a drum at a speed of 65 km/h and a room temperature of 38°C with 110% of normal load being applied thereto. Thereafter, the depth of a crack on the bottom of a groove arranged in the tread shoulder portion was measured. The results thereof are shown together in Tables below. The measurement results were converted into index values taking the testing result of the tire of Example 1 as 100, and relative evaluations were made. A larger value indicates a further improvement in the crack resistance.

The term "application rim" used herein refers to a rim defined in the below-described standard according to the tire size. The term "prescribed internal pressure" refers to an air pressure that is defined in the below-described standard according to the maximum load capacity. Further, the term "standard" used herein refers to an industrial standard that is valid in each region where the tire is manufactured or used, such as "The Tire and Rim Association Inc. Year Book" in the U.S., "The European Tyre and Rim Technical Organisation Standard Manual" in Europe, or "JATMA Year Book" of Japan Automobile Tyre Manufacturers Association in Japan.

### <Evaluation of Separation at Width-Direction End of Core-Material Cord Layer>

The state of separation at a width-direction end of the core-material cord layer was evaluated as follows. The results thereof are also shown in Tables below.

The thus obtained test tires were each mounted on a rim, inflated to a prescribed internal pressure, and then subjected to a running test on a drum at a speed of 65 km/h and a room temperature of 38°C with 150% of normal load being applied thereto. The distance traveled until a defect occurred due to separation at a width-direction end of the core-material cord layer was measured. The measurement results were converted into index values taking the testing result of the tire of Example 1 as 100, and relative evaluations were made. A larger value indicates a further improvement in the separation resistance.

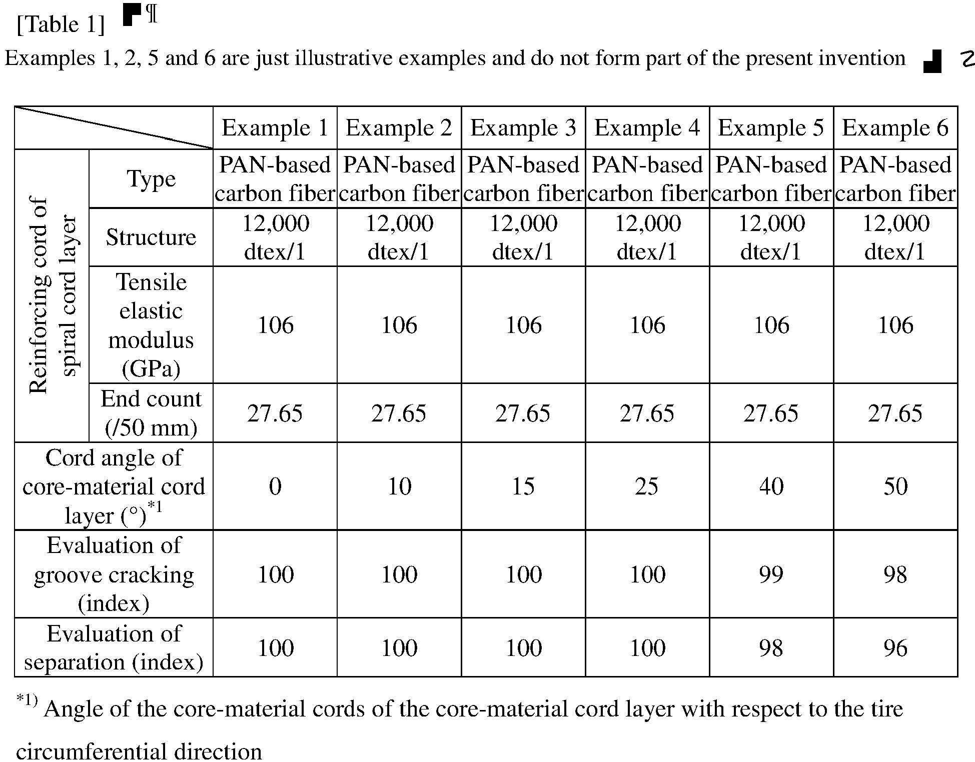

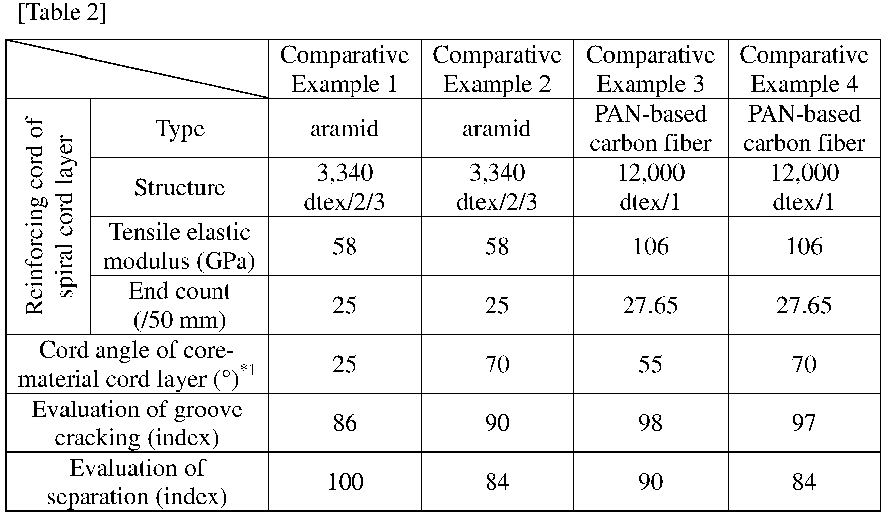

As shown in Tables above, it was confirmed that, according to the present invention, in a tire including a spiral cord layer and a core-material cord layer arranged between an upper layer and a lower layer of the spiral cord layer in a tire crown portion, both the occurrence of groove cracking and the occurrence of separation from a width-direction end of the core-material cord layer can be suppressed.

### DESCRIPTION OF SYMBOLS

1: spiral cord layer
1A: upper layer
1B: lower layer
2: core-material cord layer
10: tire for trucks and buses
11, 21, 31: tread portion
11a: corner
12, 22, 32: side wall portion
13, 23, 33: bead portion
14, 24, 34, 104: carcass
15, 25, 35: bead core
16, 26, 36: bead filler
17, 27, 37, 37a to 37d: auxiliary belt layer
27a: cap layer
27b: layered layer
20: tire for passenger vehicles
23a: recess
18, 39: belt under-cushion rubber
30: tire for construction vehicles
101: inclined belt layer
102: belt protective layer

## Claims

1. A tire (10, 20, 30) comprising:
a carcass (14, 24, 34, 104) toroidally extending between a pair of bead portions (13, 23, 33);
a spiral cord layer (1) arranged on a tire radial-direction outer side of the carcass in a crown portion and having an upper layer (1A) and a lower layer (1B) formed by spirally winding a reinforcing cord; and
a core-material cord layer (2) arranged between the upper layer and the lower layer of the spiral cord layer,
wherein the reinforcing cord of the spiral cord layer is composed of carbon fibers, **characterised in that**
the core-material cords of the core-material cord layer have an angle in a range of 15° to 25° with respect to a tire circumferential direction.

## Patentansprüche

1. Reifen (10, 20, 30) umfassend:
eine Karkasse (14, 24, 34, 104), die sich ringförmig zwischen einem Paar von Wulstabschnitten (13, 23, 33) erstreckt;
eine spiralförmige Kordlage (1), die auf einer in radialer Richtung äußeren Seite der Karkasse in einem Kronenabschnitt angeordnet ist und eine obere Lage (1A) und eine untere Lage (1B) aufweist, die durch spiralförmiges Wickeln eines Verstärkungskords gebildet werden; und
eine Kernmaterial-Kordlage (2), die zwischen der oberen Lage und der unteren Lage der spiralförmigen Kordlage angeordnet ist,
wobei der Verstärkungskord der spiralförmigen Kordlage aus Kohlenstofffasern besteht,
**dadurch gekennzeichnet, dass**
die Kernmaterialkorde der Kernmaterial-Kordlage einen Winkel in einem Bereich von 15° bis 25° in Bezug auf eine Reifenumfangsrichtung aufweisen.

## Revendications

1. Pneumatique (10, 20, 30) comprenant :
une carcasse (14, 24, 34, 104) s'étendant de manière toroïdale entre une paire de parties de bourrelet (13, 23, 33) ;
une couche de câblé en spirale (1) agencée sur un côté extérieur dans la direction radiale du pneu de la carcasse dans une partie de couronne et ayant une couche supérieure (1A) et une couche inférieure (1B) formées par enroulement en spirale d'un câblé de renfort ; et
une couche de câblé de matériau d'âme (2) agencée entre la couche supérieure et la couche inférieure de la couche de câblé en spirale,
dans lequel le câblé de renfort de la couche de câblés en spirale est composé de fibres de carbone,
**caractérisé en ce que**
les câblés de matériau d'âme de la couche de câblés de matériau d'âme ont un angle allant de 15° à 25° par rapport à une direction circonférentielle du pneumatique.
